# EUROPÄISCHE PATENTANMELDUNG

(11) **EP 1 672 243 A1**
(43) Veröffentlichungstag der Anmeldung: **21.06.2006**
(21) Anmeldenummer: 05025274.1
(22) Anmeldetag: 18.11.2005
(51) Int. Cl.: F16F 9/38, F16F 9/32, B05D 1/32, C23C 4/02, F15B 15/14

(54) **Kolbenzylindereinheit und Verfahren zum Herstellen einer Kolbenzylindereinheit**

(30) Priorität: 15.12.2004 DE 102004060304
(71) Anmelder: Stabilus GmbH, D-56070 Koblenz (DE)
(72) Erfinder: Mauer, Dirk, 56237 Nauort (DE)
(74) Vertreter: Klein, Thomas

(57) **Zusammenfassung**

Die Erfindung bezieht sich auf eine Kolbenzylindereinheit 13, insbesondere Gasfeder, mit einem an seiner Außenseite einen Oberflächenschutz aufweisenden zylindrischen Druckrohr 1 und mit einem in dem Druckrohr 1 axial verschiebbaren, eine Kolbenstange 8 aufweisenden Kolben, wobei die Kolbenstange 8 an einer kolbenstangenaustrittseitigen Stirnseite 3' des Druckrohres 1 durch eine Stirnseitenöffnung abgedichtet aus dem Druckrohr 1 herausgeführt ist. Zur Verbesserung der Korrosionsschutzeigenschaften und der Dauerhaltbarkeit des Oberflächenschutzes wird vorgeschlagen, daß der oberflächenschutz eine Pulverbeschichtung 7 aufweist und daß ein von der kolbenstangenaustrittseitigen Stirnseite 3' ausgehender Endbereich 6 des Druckrohres 1 von der Pulverbeschichtung 7 ausgenommen ist. Darüber hinaus bezieht sich die Erfindung auf ein Verfahren zum Herstellen einer Kolbenzylindereinheit 13.

## Beschreibung

Die Erfindung bezieht sich auf eine Kolbenzylindereinheit, insbesondere Gasfeder, mit einem an seiner Außenseite einen Oberflächenschutz aufweisenden zylindrischen Druckrohr und mit einem in dem Druckrohr axial verschiebbaren, eine Kolbenstange aufweisenden Kolben, wobei die Kolbenstange an einer kolbenstangenaustrittseitigen Stirnseite des Druckrohres durch eine Stirnseitenöffnung abgedichtet aus dem Druckrohr herausgeführt ist. Außerdem bezieht sich die Erfindung auf ein Verfahren zum Herstellen einer Kolbenzylindereinheit, insbesondere einer Gasfeder, mit einem zylindrischen Druckrohr und mit einem in dem Druckrohr axial verschiebbaren, eine Kolbenstange aufweisenden Kolben, wobei die Kolbenstange an einer kolbenstangenaustrittseitigen Stirnseite des Druckrohres abgedichtet aus dem Druckrohr herausgeführt ist.

Eine vorgenannte Kolbenzylindereinheit und ein vorgenanntes Verfahren sind bei einer Kolbenzylindereinheit bekannt, deren Druckrohr mit einem zum Beispiel aus einem Kunststoff bestehenden Schrumpfschlauch als Oberflächenschutz versehen ist. Der Schrumpfschlauch kann gegebenenfalls mittels eines Klebers mit der von dem Schrumpfschlauch überdeckten Oberfläche des Druckrohres verklebt sein. Auch kann der Schrumpfschlauch einen Teil der kolbenstangenaustrittseitigen Stirnfläche des Druckrohres umschließen. Es ist bei dem einen Schrumpfschlauch aufweisenden Oberflächenschutz vergleichsweise aufwendig, mögliche Schwankungen in der Korrosionsschutzwirkung des Oberflächenschutzes zu vermeiden.

Der vorliegenden Erfindung liegt ausgehend vom Stand der Technik die Aufgabe zugrunde, eine Kolbenzylindereinheit der eingangs genannten Art zu schaffen, die verbesserte Korrosionsschutzeigenschaften aufweist. Darüber hinaus liegt der Erfindung die Aufgabe zugrunde, ein Verfahren der eingangs genannten Art zum Herstellen einer Kolbenzylindereinheit mit verbesserten Korrosionsschutzeigenschaften anzugeben.

Die erstgenannte Aufgabe wird bei einer Kolbenzylindereinheit der eingangs genannten Art erfindungsgemäß dadurch gelöst, daß ein von der kolbenstangenaustrittseitigen Stirnseite ausgehender Endbereich des Druckrohres von dem Oberflächenschutz ausgenommen ist.

Durch den von dem Oberflächenschutz ausgenommenen Endbereich des Druckrohres kann auf sehr vorteilhafte Weise das mit dem Oberflächenschutz versehene Druckrohr in dem vorgenannten Endbereich noch mechanisch bearbeitet werden, ohne daß die Gefahr einer Beschädigung des Oberflächenschutzes besteht. Auf diese Weise kann kostengünstig und eine hohe Betriebssicherheit der Kolbenzylindereinheit gewährleistend ein Schließen und Abdichten der kolbenstangenaustrittseitigen Stirnseite des Druckrohres erfolgen.

Der Oberflächenschutz kann eine Pulverbeschichtung oder eine Spritzlackierung oder eine Tauchlackierung aufweisen.

Durch die Pulverbeschichtung, die insbesondere eine Pulverlackschicht aufweist, ist der Oberflächenschutz dauerhaft sehr korrosionsbeständig. Zusätzlich zu den mit der Erfindung erzielten guten Korrosionsschutzeigenschaften des Oberflächenschutzes wird durch eine hohe Schlagfestigkeit und Abriebbeständigkeit der Pulverbeschichtung vorteilhaft auch die Gefahr von Beschädigungen der Kolbenzylindereinheit aufgrund von mechanischen Einflüssen, insbesondere Stößen, Schlägen und Reibung, erheblich vermindert. Weiterhin ist die erfindungsgemäße Kolbenzylindereinheit besonders widerstandsfähig gegenüber Ölen, Fetten sowie einer großen Bandbreite von Chemikalien. Insgesamt weist der Oberflächenschutz eine wesentlich verbesserte Dauerhaltbarkeit auf.

Die Erfindung umfaßt sowohl Kolbenzylindereinheiten mit einseitiger Kolbenstange als auch Kolbenzylindereinheiten mit zweiseitiger Kolbenstange; in letztgenanntem Fall sind beide Stirnseiten des Druckrohres kolbenstangenaustrittseitige Stirnseiten, und ausgehend von jeder dieser Stirnseiten ist ein von der Pulverbeschichtung ausgenommener Endbereich vorhanden.

Gemäß einer vorteilhaften Weiterbildung der Erfindung weist das Druckrohr an seiner gesamten nach außen gewandten Oberfläche eine Grundbeschichtung auf, und der Oberflächenschutz, insbesondere die Pulverbeschichtung ist auf der Grundbeschichtung angeordnet. Die Grundbeschichtung ist sowohl ein Haftvermittler für den Oberflächenschutz, insbesondere die Pulverbeschichtung als auch ein Korrosionsschutz für das Druckrohr. So wird zum einen eine weiter verbesserte Dauerhaltbarkeit des Oberflächenschutzes, insbesondere der Pulverbeschichtung erreicht als auch ein korrosionsvermindernder Basisschutz insbesondere für den von dem Oberflächenschutz, insbesondere der Pulverbeschichtung ausgenommenen Endbereich des Druckrohres erzielt. Neben der nach außen gewandten Oberfläche des Druckrohres kann auch zumindest ein Teil der nach innen gewandten Oberfläche des Druckrohres mit der Grundbeschichtung versehen sein.

Vorteilhaft kann die Korrosionsbeständigkeit der Kolbenzylindereinheit zusätzlich und einfach erhöht werden, wenn gemäß einer anderen Weiterbildung der Erfindung der von dem Oberflächenschutz, insbesondere der Pulverbeschichtung ausgenommene Endbereich des Druckrohres mit einem Korrosionsschutzöl benetzt ist.

Gemäß einer anderen vorteilhaften Weiterbildung der Erfindung weist das Druckrohr eine den von dem Oberflächenschutz, insbesondere der Pulverbeschichtung ausgenommenen Endbereich des Druckrohres abdeckende Schutzkappe auf. Der Endbereich wird so vor mechanischer Beschädigung und auch vor korrosiven Umwelteinflüssen zuverlässig geschützt.

Man könnte sich vorstellen, daß die Schutzkappe für einen sicheren Halt auf dem Druckrohr beispielsweise mittels einer Klebung mit dem Druckrohr verbunden ist. Hingegen kann ein fester Sitz der Schutzkappe auf dem Druckrohr auf besonders einfache Weise dadurch erreicht werden, daß gemäß einer vorteilhaften Weiterbildung der Erfindung die Schutzkappe aus einem gummielastischen Werkstoff besteht. Zudem kann mit einer solchen Schutzkappe auch eine zuverlässige Abdichtung des Druckrohres erfolgen.

Besonders kostengünstig ist es, wenn die Schutzkappe, die grundsätzlich zum Beispiel auch aus einem metallischen Werkstoff bestehen kann, gemäß einer anderen vorteilhaften Weiterbildung der Erfindung aus einem Kunststoff besteht.

Gemäß einer anderen vorteilhaften Weiterbildung der Erfindung weist das Druckrohr an der kolbenstangenaustrittseitigen Stirnseite eine radial nach innen gerichtete, das heißt zu der Druckrohrmittelachse hin gewandte, Bördelung auf. Dadurch liegt ein mechanisch sehr stabiler und dauerhaltbarer Abschluß des Druckrohres vor, wobei durch die Bördelung gleichzeitig die Stirnseitenöffnung für den Kolbenstangenaustritt geschaffen sein kann.

Insbesondere zum Halten von in dem Druckrohr angeordneten Bauteilen ist es von Vorteil, wenn gemäß einer anderen Weiterbildung der Erfindung das Druckrohr in dem von dem Oberflächenschutz, insbesondere der Pulverbeschichtung ausgenommenen Endbereich eine radial nach innen gerichtete, das heißt zu der Druckrohrmittelachse hin gewandte, Sicke aufweist. Durch das Anordnen der Sicke in dem von dem Oberflächenschutz, insbesondere von der Pulverbeschichtung ausgenommenen Endbereich wird auf einfache Weise und besonders zuverlässig eine Beschädigung des Oberflächenschutzes, insbesondere der Pulverbeschichtung durch die Sicke ausgeschlossen. Vorzugsweise ist die Sicke um das Druckrohr über dessen Umfang umlaufend ausgebildet, sie kann aber beispielsweise auch aus aneinandergereihten kurzen Sickenabschnitten mit dazwischenliegenden Freiräumen ausgebildet sein.

Gemäß einer vorteilhaften Weiterbildung der Erfindung stützt die Bördelung und/oder die Sicke eine Kolbenstangendichtung zur Abdichtung der Stirnseitenöffnung des Druckrohres und/oder eine Kolbenstangenführung in axialer Richtung ab. Damit wird eine hohe Bauteilintegration, sichere Abdichtung und große mechanische Stabilität der Kolbenzylindereinheit erreicht.

Die oben zweitgenannte Aufgabe wird bei einem Verfahren der eingangs genannten Art erfindungsgemäß dadurch gelöst, daß das Druckrohr eine offene Stirnseite aufweisend hergestellt wird und daß nachfolgend auf das Druckrohr unter Aussparung eines von der offenen Stirnseite ausgehenden Endbereiches des Druckrohres in einem Beschichtungsverfahren, insbesondere in einem Pulverbeschichtungsverfahren ein Oberflächenschutz aufgebracht wird. Das Beschichtungsverfahren kann auch eine Spritzlackierverfahren oder ein Tauchlackierverfahren sein.

Das erfindungsgemäße Verfahren, das vorteilhaft eine hohe Prozeßsicherheit aufweist, eignet sich insbesondere zum Herstellen einer oben beschriebenen, erfindungsgemäßen Kolbenzylindereinheit. Gegenüber einem Naßlackbeschichtungsverfahren ist das Pulverbeschichtungsverfahren wesentlich prozeßsicherer, kostengünstiger, weist kürzere Prozeßzeiten auf und erfordert einen geringeren Energieeinsatz. Von besonderem Vorteil ist es, daß das erfindungsgemäße Verfahren maschinell und zumindest weitestgehend automatisiert durchgeführt werden kann. Es führt zudem zu einem lebensdauerlangen Korrosionsschutz für die Kolbenzylindereinheit. Durch das Aufbringen des Oberflächenschutzes, der insbesondere eine Pulverbeschichtung aufweist, auf das Druckrohr bei offener Stirnseite des Druckrohres ist es vorteilhaft ermöglicht, in dem Druckrohr anzuordnende Bauteile sowie vor allem auch Druckfluid, insbesondere Gas, für eine als Druckfeder, insbesondere Gasfeder, ausgebildete Kolbenzylindereinheit erst nach Durchführung des Beschichtungsverfahrens, insbesondere des Pulverbeschichtungsverfahrens, das regelmäßig einen Temperaturschritt zum Einbrennen beispielsweise eines Pulverlackes umfaßt, in das Druckrohr einzufügen und so eine Beschädigung solcher Bauteile oder des gesamten Druckrohres aufgrund überhöhter Temperaturbeanspruchung auszuschließen. Bei dem Pulverbeschichtungsverfahren handelt es sich regelmäßig um ein elektrostatisches Oberflächenbeschichtungsverfahren, wobei eine elektrisch geladene Pulverwolke gebildet wird, geladene Pulverteilchen zu einer geerdeten Oberfläche des Druckrohres transportiert werden, die Pulverteilchen sich auf der Oberfläche niederschlagen und elektrisch an der Oberfläche haften sowie eine Pulverschicht unter elektrischer Selbstbegrenzung der Schichtdicke gebildet und eingebrannt wird. Die Bildung der Pulverwolke kann zum Beispiel mit einer Sprühpistole und in einem Korona-Verfahren mittels Hochspannung oder in einem tribokinetischen Verfahren mittels Reibung der Pulverpartikel an einem Pistolenrohr und anderen Reibpartnern erfolgen.

Grundsätzlich ist es vorstellbar, die Beschichtung, insbesondere die Pulverbeschichtung in dem Beschichtungsverfahren derart gezielt auf das Druckrohr aufzubringen, daß der auszusparende Endbereich des Druckrohres frei bleibt. Hingegen wird das Beschichtungsverfahren erheblich vereinfacht, wenn gemäß einer vorteilhaften Weiterbildung der Erfindung der von der offenen Stirnseite des Druckrohres ausgehende Endbereich zu seiner Aussparung bei der Durchführung des Beschichtungsverfahrens abgedeckt wird.

Vorteilhaft wird gemäß einer anderen Weiterbildung der Erfindung vor Durchführung des Beschichtungsverfahrens, insbesondere des Pulverbeschichtungsverfahrens eine Grundbeschichtung auf die gesamte nach außen gewandte Oberfläche des Druckrohres aufgebracht. Mit der Grundbeschichtung kann das nachfolgende Beschichtungsverfahren vereinfacht werden, insbesondere kann die Haftung der in dem Pulverbeschichtungsverfahren aufzubringenden Pulverbeschichtung auf dem Druckrohr verbessert werden.

Gemäß einer anderen vorteilhaften Weiterbildung der Erfindung werden nach Durchführung des Beschichtungsverfahrens der Kolben und die Kolbenstange in das Druckrohr eingeführt und das Druckrohr mit einem Druckfluid befüllt. So wird eine mögliche Beschädigung von Kolben und/oder Kolbenstange während des Beschichtungsverfahrens ausgeschlossen. Ebenso wird eine eventuell von einer Überhitzung des Druckfluids, insbesondere eines als Druckfluid verwendeten Gases, verursachte Beschädigung des Druckrohres einschließlich gegebenenfalls weiterer, in dem Druckrohr enthaltener Bauteile wie zum Beispiel einer Kolbenstangendichtung oder einer Kolbenstangenführung vermieden.

In besonders einfacher, kostengünstiger und prozeßsicherer Weise kann das Druckrohr mit Halte- und/oder Stützelementen versehen werden, wenn gemäß einer vorteilhaften Weiterbildung der Erfindung nachfolgend das Druckrohr an der offenen Stirnseite radial nach innen gebördelt wird und/oder eine radial nach innen gerichtete Sicke in den bei dem Beschichtungsverfahren, insbesondere dem Pulverbeschichtungsverfahren ausgesparten Endbereich des Druckrohres eingebracht wird.

Gemäß einer anderen vorteilhaften Weiterbildung der Erfindung wird abschließend auf den bei dem Beschichtungsverfahren, insbesondere dem Pulverbeschichtungsverfahren ausgesparten Endbereich ein Korrosionsschutzöl aufgebracht und eine Schutzkappe aufgesetzt, wodurch in einem einfachen, kostengünstigen und leicht zu automatisierenden Verfahrensabschnitt die Korrosionsbeständigkeit der herzustellenden Kolbenzylindereinheit weiter verbessert wird.

Ein Ausführungsbeispiel der Erfindung ist in der Zeichnung schematisiert dargestellt und wird im folgenden näher erläutert. Es zeigen
- Figur 1:: ein Druckrohr in einer Seitenansicht,
- Figur 2:: das Druckrohr nach Figur 1 mit einer Pulverbeschichtung,
- Figur 3:: das Druckrohr nach Figur 2 mit einer Kolbenstange und
- Figur 4:: das Druckrohr nach Figur 3 mit einer Schutzkappe.

Sich jeweils entsprechende Elemente sind in allen Figuren mit gleichen Bezugszeichen versehen.

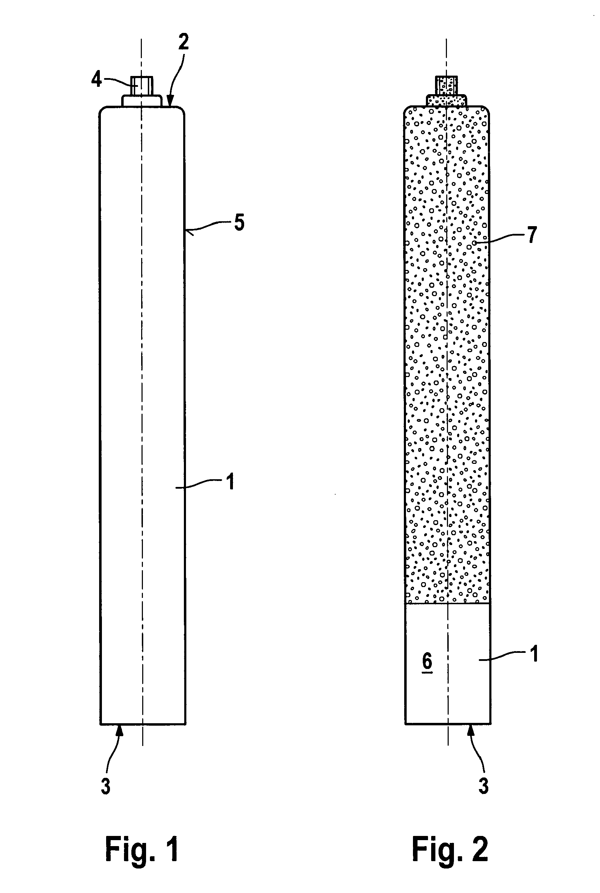

Figur 1 zeigt in einer Seitenansicht ein metallisches Druckrohr 1 für eine Kolbenzylindereinheit. Das Druckrohr 1 ist zylindrisch ausgebildet und weist eine geschlossene Stirnseite 2 und eine offene Stirnseite 3 auf. An der geschlossenen Stirnseite 2 ist das Druckrohr 1 mit einem Gewindebolzen 4 versehen. Auf den Gewindebolzen 4 kann ein Anschlußstück für die Kolbenzylindereinheit aufgeschraubt werden.

Zur Herstellung der Kolbenzylindereinheit wird das Druckrohr 1 zuerst gesäubert. Dann wird eine als Korrosionsschutzschicht ausgebildete Grundbeschichtung auf die gesamte nach außen gewandte Oberfläche 5 des Druckrohres 1 aufgebracht und durch Trocknen verfestigt.

Danach wird ein in Figur 2 gezeigter, von der offenen Stirnseite 3 ausgehender Endbereich 6 des Druckrohres 1 abgedeckt. Nunmehr wird auf das Druckrohr 1 in einem Pulverbeschichtungsverfahren ein eine Pulverbeschichtung 7 aufweisender Oberflächenschutz aufgebracht und in einem Temperaturschritt eingebrannt, wobei der vorgenannte Endbereich 6 aufgrund seiner Abdeckung ausgespart bleibt und folglich keine Pulverbeschichtung aufweist. Somit wird die außenliegende Oberfläche des Druckrohres 1 jetzt von der Grundbeschichtung in dem von der offenen Stirnseite 3 ausgehenden Endbereich 6 und von der Pulverbeschichtung 7 in den übrigen Bereichen des Druckrohres 1 gebildet.

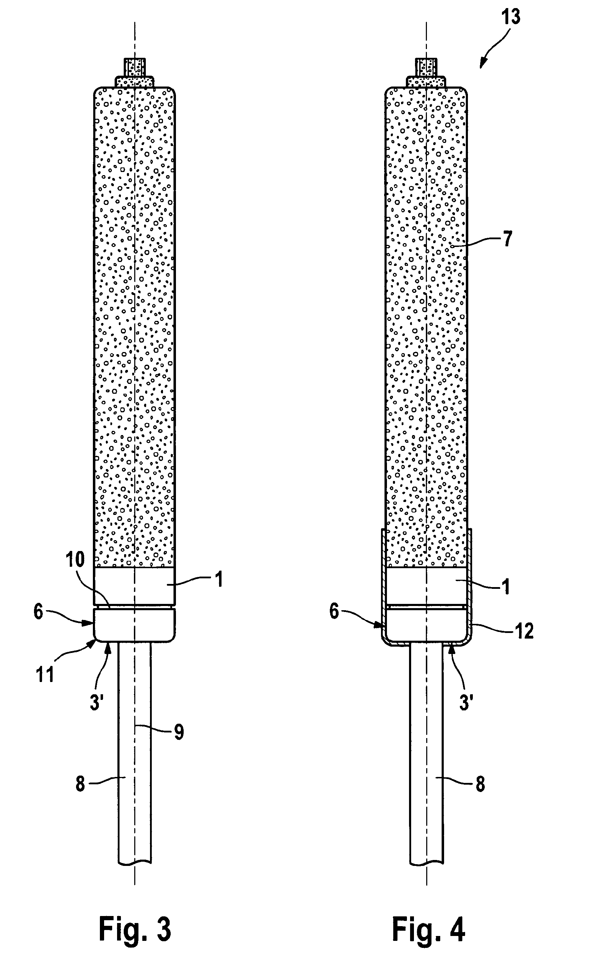

Nachfolgend werden Einbauteile, die unter anderem einen Kolben, eine Kolbenstange 8 (vgl. Figur 3), eine Kolbenstangeführung und eine Kolbenstangendichtung umfassen, in das Druckrohr 1 eingesetzt. Außerdem wird ein Druckfluid, bevorzugt Gas, unter einem Vordruck in das Druckrohr 1 eingebracht. Das Einsetzen der Einbauteile und Einbringen des Druckfluids ist jetzt gefahrlos möglich, da keine Wärmebeaufschlagüng - wie sie beispielsweise noch im Rahmen des oben genannten Pulverbeschichtungsverfahrens erfolgte - des Druckrohres 1 mehr stattfindet. Somit ist eine nachfolgende Beschädigung der Einbauteile oder eine unerwünschte Ausdehnung des Druckfluids, die zu einer Zerstörung des Druckrohres 1 führen könnte, nicht zu befürchten.

Jetzt wird in den bei dem Pulverbeschichtungsverfahren ausgesparten Endbereich 6 eine radial nach innen, das heißt zu der Druckrohrmittelachse 9 hin gewandte, umlaufende Sicke 10 eingebracht. Die Sicke 10 stützt die in dem Druckrohr 1 angeordnete Kolbenstangenführung und/oder Kolbenstangendichtung in axialer Richtung ab.

Außerdem wird das Druckrohr 1 an der offenen Stirnseite 3 (vgl. Figur 2) radial nach innen gebördelt. Die dadurch entstandene Bördelung 11 schließt zum einen das Druckrohr 1 endseitig ab und stützt zudem die Kolbenstangenführung und/oder die Kolbenstangendichtung in axialer Richtung ab. Zum anderen bildet der zur Druckrohrmittelachse 9 hin gewandte Rand der Bördelung 11 eine Stirnseitenöffnung des Druckrohres 1, durch die die Kolbenstange 8 aus dem Inneren des Druckrohres 1 herausgeführt ist. Die ursprünglich offene Stirnseite ist nunmehr eine kolbenstangenaustrittseitige Stirnseite 3'.

Da der bei dem Pulverbeschichtungsverfahren ausgesparte Endbereich 6 keine Pulverbeschichtung aufweist, besteht weder beim Einbringen der Sicke noch beim Bördeln die Gefahr eines Ablösens, insbesondere Abblätterns, der Pulverbeschichtung aufgrund Fließens des Druckrohrmaterials.

Abschließend wird auf den bei dem Pulverbeschichtungsverfahren ausgesparten Endbereich 6 des Druckrohres 1 ein Korrosionsschutzöl aufgebracht und eine in Figur 4 dargestellte, aus einem gummielastischen Kunststoff bestehende Schutzkappe 12 aufgesteckt, die insbesondere die Grundbeschichtung vor mechanischer Abnutzung schützt. Die Kolbenzylindereinheit 13 ist damit vollständig hergestellt.

### Bezugszeichenliste

- 1: Druckrohr
- 2: Stirnseite
- 3, 3': Stirnseite
- 4: Gewindebolzen
- 5: Oberfläche
- 6: Endbereich
- 7: Pulverbeschichtung
- 8: Kolbenstange
- 9: Druckrohrmittelachse
- 10: Sicke
- 11: Bördelung
- 12: Schutzkappe
- 13: Kolbenzylindereinheit

## Patentansprüche

1. Kolbenzylindereinheit, insbesondere Gasfeder, mit einem an seiner Außenseite einen Oberflächenschutz aufweisenden zylindrischen Druckrohr und mit einem in dem Druckrohr axial verschiebbaren, eine Kolbenstange aufweisenden Kolben, wobei die Kolbenstange an einer kolbenstangenaustrittseitigen Stirnseite des Druckrohres durch eine Stirnseitenöffnung abgedichtet aus dem Druckrohr herausgeführt ist, **dadurch gekennzeichnet, daß** ein von der kolbenstangenaustrittseitigen Stirnseite (3') ausgehender Endbereich (6) des Druckrohres (1) von dem Oberflächenschutz ausgenommen ist.

2. Kolbenzylindereinheit nach Anspruch 1, **dadurch gekennzeichnet, daß** der Oberflächenschutz eine Pulverbeschichtung (7) oder eine Spritzlackierung oder eine Tauchlackierung aufweist.

3. Kolbenzylindereinheit nach einem der vorhergehenden Ansprüche, **dadurch gekennzeichnet , daß** das Druckrohr (1) an seiner gesamten nach außen gewandten Oberfläche (5) eine Grundbeschichtung aufweist und daß der Oberflächenschutz, insbesondere die Pulverbeschichtung (7) auf der Grundbeschichtung angeordnet ist.

4. Kolbenzylindereinheit nach einem der vorhergehenden Ansprüche, **dadurch gekennzeichnet , daß** der von dem Oberflächenschutz, insbesondere von der Pulverbeschichtung (7) ausgenommene Endbereich (6) des Druckrohres (1) mit einem Korrosionsschutzöl benetzt ist.

5. Kolbenzylindereinheit nach einem der vorhergehenden Ansprüche, **dadurch gekennzeichnet, daß** das Druckrohr (1) eine den von dem Oberflächenschutz, insbesondere von der Pulverbeschichtung (7) ausgenommenen Endbereich (6) des Druckrohres (1) abdeckende Schutzkappe (12) aufweist.

6. Kolbenzylindereinheit nach Anspruch 5, **dadurch gekennzeichnet, daß** die Schutzkappe (12) aus einem gummielastischen Werkstoff besteht.

7. Kolbenzylindereinheit nach Anspruch 5 oder 6, **dadurch gekennzeichnet , daß** die Schutzkappe (12) aus einem Kunststoff besteht.

8. Kolbenzylindereinheit nach einem der vorhergehenden Ansprüche, **dadurch gekennzeichnet, daß** das Druckrohr (1) an der kolbenstangenaustrittseitigen Stirnseite (3') eine radial nach innen gerichtete Bördelung (11) aufweist.

9. Kolbenzylindereinheit nach einem der vorhergehenden Ansprüche, **dadurch gekennzeichnet, daß** das Druckrohr (1) in dem von der Pulverbeschichtung (7) ausgenommenen Endbereich (6) eine radial nach innen gerichtete Sicke (10) aufweist.

10. Kolbenzylindereinheit nach Anspruch 8 und/oder 9, **dadurch gekennzeichnet, daß** die Bördelung (11) und/oder die Sicke (10) eine Kolbenstangendichtung zur Abdichtung der Stirnseitenöffnung des Druckrohres (1) und/oder eine Kolbenstangenführung in axialer Richtung abstützt.

11. Verfahren zum Herstellen einer Kolbenzylindereinheit, insbesondere einer Gasfeder, mit einem zylindrischen Druckrohr und mit einem in dem Druckrohr axial verschiebbaren, eine Kolbenstange aufweisenden Kolben, wobei die Kolbenstange an einer kolbenstangenaustrittseitigen Stirnseite des Druckrohres abgedichtet aus dem Druckrohr herausgeführt ist, **dadurch gekennzeichnet, daß** das Druckrohr (1) eine offene Stirnseite (3) aufweisend hergestellt wird und daß nachfolgend auf das Druckrohr (1) unter Aussparung eines von der offenen Stirnseite (3) ausgehenden Endbereiches (6) des Druckrohres (1) in einem Beschichtungsverfahren, insbesondere in einem Pulverbeschichtungsverfahren ein Oberflächenschutz aufgebracht wird.

12. Verfahren zum Herstellen einer Kolbenzylindereinheit nach Anspruch 11,
**dadurch gekennzeichnet, daß** der von der offenen Stirnseite (3) des Druckrohres (1) ausgehende Endbereich (6) zu seiner Aussparung bei der Durchführung des Beschichtungsverfahrens, insbesondere des Pulverbeschichtungsverfahrens abgedeckt wird.

13. Verfahren zum Herstellen einer Kolbenzylindereinheit nach Anspruch 11 oder 12,
**dadurch gekennzeichnet, daß** vor Durchführung des Beschichtungsverfahrens, insbesondere des Pulverbeschichtungsverfahrens eine Grundbeschichtung auf die gesamte nach außen gewandte Oberfläche (5) des Druckrohres (1) aufgebracht wird.

14. Verfahren zum Herstellen einer Kolbenzylindereinheit nach einem der Ansprüche 11 bis 13, **dadurch gekennzeichnet, daß** nach Durchführung des Beschichtungsverfahrens, insbesondere des Pulverbeschichtungsverfahrens der Kolben und die Kolbenstange (8) in das Druckrohr (1) eingeführt werden und das Druckrohr (1) mit einem Druckfluid befüllt wird.

15. Verfahren zum Herstellen einer Kolbenzylindereinheit nach Anspruch 14,
**dadurch gekennzeichnet, daß** nachfolgend das Druckrohr (1) an der offenen Stirnseite (3) radial nach innen gebördelt wird und/oder eine radial nach innen gerichtete Sicke (10) in den bei dem Beschichtungsverfahren, insbesondere dem Pulverbeschichtungsverfahren ausgesparten Endbereich des Druckrohres (1) eingebracht wird.

16. Verfahren zum Herstellen einer Kolbenzylindereinheit nach einem der vorhergehenden Ansprüche, **dadurch gekennzeichnet, daß** abschließend auf den bei dem Beschichtungsverfahren, insbesondere dem Pulverbeschichtungsverfahren ausgesparten Endbereich (6) ein Korrosionsschutzöl aufgebracht und eine Schutzkappe (12) aufgesetzt wird.
